# EUROPEAN PATENT APPLICATION

(11) **EP 4 647 229 A1**
(43) Date of publication of application: **12.11.2025**
(21) Application number: 25174823.2
(22) Date of filing: 07.05.2025
(51) Int. Cl.: B29C 43/36, B29C 51/26, B29C 70/46, B29C 70/54, B29C 70/56, B29C 43/00, B29C 43/22, B29K 105/08, B29L 31/30

(54) **GRIPPING SYSTEM FOR COMPRESSION MOLDING OF SLABS OF COMPOSITE MATERIAL**

(30) Priority: 10.05.2024 IT 202400010618
(71) Applicant: Leonardo S.p.A., 00195 Roma (IT)
(72) Inventor: SPORTELLI, Angelo, 74023 GROTTAGLIE (TA) (IT); CORVAGLIA, Stefano Giuseppe, 74023 GROTTAGLIE (TA) (IT); SCROCCA, Marco, 74023 GROTTAGLIE (TA) (IT); ARGANESE, Michele, 74023 GROTTAGLIE (TA) (IT); BUCCOLIERO, Giuseppe, 74023 GROTTAGLIE (TA) (IT)
(74) Representative: Studio Torta S.p.A.

(57) **Abstract**

A gripping system (1) comprising: a support structure (3) defining a cavity (5) intended to receive a slab (2) of composite material to be compression molded; and at least two releasable gripping members (4), carried by the support structure (3) and configured to retain the slab (2) in a predetermined position for molding; each gripping member (4) comprises: an elastic resting element (25) adapted to receive a peripheral edge (9) of the slab (2); and jaw (27) facing the elastic resting element (25) along a loading direction (A) of the slab (2) and having a head portion (28) adapted to cooperate, in use, with the aforementioned peripheral edge (9), on the opposite side with respect to the elastic resting element (25); the jaw (27) is movable between a stable equilibrium operative position, in which it protrudes into the cavity (5), and an unstable equilibrium operative position, in which it is set aside from the cavity (5) and allows the slab (2) to move along the loading direction (A); a constraint element (41) is also provided to inhibit the movement of the jaw (27) to the unstable equilibrium operative position in a moving direction (E) of the slab (2) contrary to the loading direction (A).

## Description

### CROSS-REFERENCE TO RELATED APPLICATIONS

This patent application claims priority from Italian patent application no. 102024000010618 filed on May 10, 2024, the entire disclosure of which is incorporated herein by reference.

### TECHNICAL FIELD

The invention relates to a gripping system for compression molding of slabs of composite material in order to manufacture parts or components intended, in particular, for aeronautical or naval applications, to which explicit reference will be made in the description below without for this reason lacking generality.

### PRIOR ART

As it is known, composite materials are used in various industrial fields, including the aeronautical industry and the naval industry. In particular, fibre-reinforced composite materials, commonly referred to as "pre-pregs", are known, which generally consist of a semi-finished product comprising a matrix of resin and reinforcement fibres immersed in the matrix. The fibres can be arranged according to different configurations, for example in one single direction, in two or several directions having different orientations, or they can be arranged so as to form a fabric. The matrix is used to fix the fibres to one another and, if necessary, to other components during production.

Pre-pregs are generally prepared in the form of belts and wound into rolls; in order to achieve the desired mechanical properties, pre-pregs must be subjected to a consolidation process by means of heat and often also under pressure.

The use of pre-pregs having a matrix of thermoplastic material is known in particular.

In this type of pre-pregs, the matrix resin has a high molecular weight and, therefore, on the one hand, it does not need to be subjected to a polymerization cycle and, on the other hand, it does not have tackiness characteristics.

A thermoplastic matrix pre-preg can be considered, to a first approximation, as an article in final conditions formed by a single sheet or slab. In order to be able to form a laminate, it needs to be heated so as to melt at least the contact surfaces of the layers of thermoplastic pre-preg making it up, compact it under pressure and then let it cool. The temperature to be reached for melting is the glass transition temperature T_{g} for amorphous thermoplastics, and the melting temperature T_{f} for semi-crystalline thermoplastics.

In these cases, the apparatus for producing a laminate based on thermoplastic pre-pregs should also provide the heat to reach a temperature (which may be excessively high depending on the materials) such as to melt the resin and thus obtain an adhesion between the different layers that will constitute the laminate; moreover, for semi-crystalline thermoplastics, too rapid cooling could cause the part to amorphize, with consequent loss of performance characteristics.

Composite materials with a thermoplastic matrix have numerous advantages, such as, for example, the following ones:
- they are stable at room temperature;
- they have a high resilience;
- they enable quick machining;
- they do not need autoclaving operations; and
- they are recyclable.

In order to obtain the desired configurations of the parts or components in a thermoplastic resin matrix composite material, the use of thermoforming on pre-consolidated slabs is known.

The main advantages of thermoforming are the production flexibility, the relatively low costs, the speed of the process and the high degree of repeatability and reliability.

In particular, a thermoforming device generally comprises a pre-heating station, in which a pre-consolidated flat slab made of a thermoplastic resin matrix composite material is subjected to a heating operation to obtain the softening thereof, and a molding station, in which the pre-consolidated slab, which is subsequently heated in the pre-heating station, is subjected to a compression molding operation to obtain the desired part or component.

The molding station basically comprises:
- a fixed support structure;
- an upper half-mold provided with a lower shaped surface corresponding to the profile of an upper surface of the composite material part to be manufactured through molding;
- a lower half-mold provided with an upper shaped surface corresponding to the profile of a lower surface of the composite material part to be manufactured through molding;
- gripping means carried by the support structure in a fixed position and configured to hold the slab in a position interposed between the upper half-mold and the lower half-mold during the entire molding operation; and
- means for moving at least one of the upper and lower half-molds from and to the slab in a direction transverse to the slab itself.

The design phase of the slab gripping system is a particularly delicate phase both in terms of quality of the part or component to be manufactured and in terms of reduction of swarf.

Traditional gripping systems for pre-consolidated slabs generally comprise fixed arms, to which elastically loaded hooks are connected, for example loaded by helical springs, which are configured to hold the slabs to be subjected to molding in tension, engaging - in use - respective through holes obtained on lateral ears of the slabs themselves. In particular, the slabs are cut from sheets of pre-consolidated composite material so as to have the desired number of lateral ears that must subsequently be fixed to the hooks carried by the fixed arms. These lateral ears are then drilled in order to allow the respective hooks to be inserted. After completion of the thermoforming, the ears are removed to obtain the desired final shape and the manufactured part or component is trimmed along the edges.

It is therefore clear that gripping systems of this type determine the formation of a high quantity of swarf, which is poorly combined with the generally high cost of composite materials.

Furthermore, these systems require a manual slab gripping process, which excludes their use in automated production lines.

In order to allow for a drastic reduction in swarf, the Applicant has devised an improved solution for the gripping system for pre-consolidated slabs. This improved solution is disclosed in patent EP3789178A1 and involves a manual gripping system comprising grippers configured to directly grip a peripheral edge of the slab and release the slab itself as soon as it is compressed between two half-molds during molding.

In this way, the finished part or component does not have lateral ears to be provided in an initial phase and to be removed in a phase following the molding operation, and the trimming operation of the edges of the finished part is limited.

The solution devised by the Applicant, although functionally valid, is susceptible to improvements, in particular in relation to the loading of the slabs to be molded on the gripping system.

Therefore, there is a need to provide a gripping system for the compression molding of slabs of composite material, which makes it possible to overcome the drawbacks associated with known gripping systems and discussed above in a simple and economic manner.

### SUMMARY OF THE INVENTION

According to the invention, there is provided a gripping system for compression molding of a slab of composite material as claimed in claim 1 and in the claims depending on it.

### BRIEF DESCRIPTION OF THE DRAWINGS

The invention will now be described with reference to the accompanying drawings showing a non-limiting embodiment thereof, wherein:
- figure 1 is a schematic perspective view of a gripping system for a composite material slab to be subjected to a compression molding operation, according to the invention;
- figure 2 is a schematic perspective view, on a larger scale and with parts removed for greater clarity, of a detail of the gripping system of figure 1;
- figure 3 is a perspective view, on a further larger scale and in a partially sectional representation, of a further detail of the gripping system of figure 2;
- figures 4A, 4B and 4C are schematic side views, on a smaller scale, of the detail of figure 3 in different operating phases during the interaction of the gripping system of the invention with the slab to be subjected to the compression molding operation;
- figure 5A is a schematic perspective view, with parts removed for greater clarity, of a possible variant of part of the gripping system shown in figures 1 and 2; and
- figure 5B is a top view, on a larger scale and with parts removed for greater clarity, of a detail of figure 5A in a different operating configuration.

### DETAILED DESCRIPTION OF A PREFERRED EMBODIMENT OF THE INVENTION

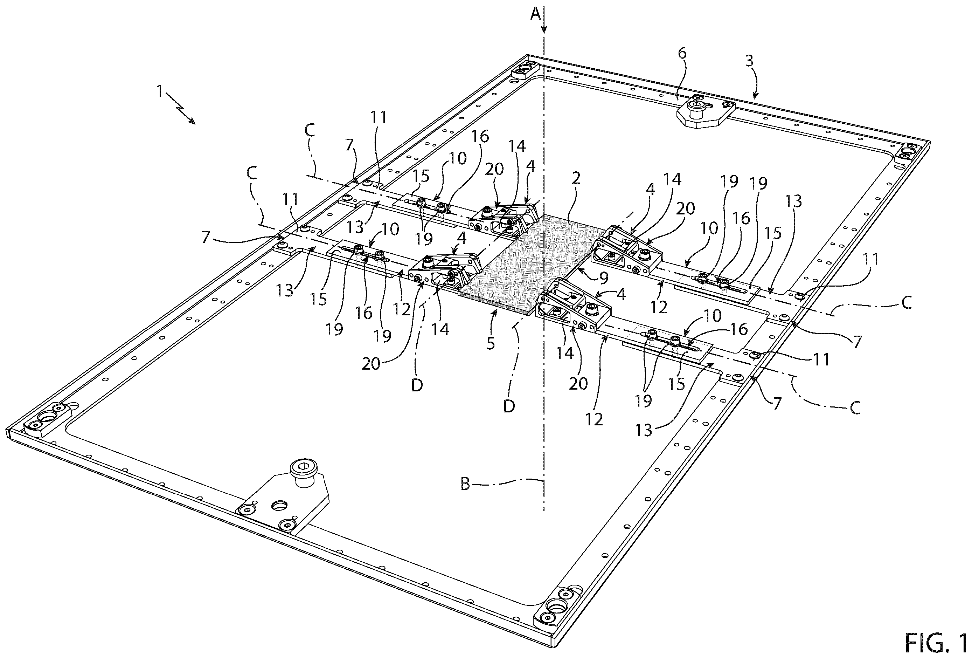

In figure 1, reference number 1 indicates, as a whole, a gripping system for a slab 2 of composite material to be subjected to a compression molding operation in a thermoforming station (known per se and not shown) in order to manufacture a part or a component of composite material (not shown), preferably to be used in the aeronautical industry or in the naval industry.

In the specific case shown herein, the matrix of the slab 2 is made of a semi-crystalline or amorphous thermoplastic resin, in which reinforcing fibres, preferably carbon fibres, are preferably immersed. Alternatively, other types of known reinforcing fibres can be used, such as for example glass fibres or a combination of glass and carbon fibres.

It should be noted that the starting slab 2 for performing the compression molding operation is a pre-consolidated slab, i.e. subjected - in a known manner - to a preliminary consolidation process in a high-temperature press.

In the example shown in the accompanying figures, the slab 2 has a rectangular shape, but other types of profile are obviously possible.

The gripping system 1 comprises a fixed support structure 3 (visible only in figure 1) and two or more releasable gripping members 4, carried by the support structure 3 and configured to retain the slab 2 in a predetermined position for compression molding.

The gripping system 1 is intended, in a known manner, to be interposed between an upper half-mold and a lower half-mold (known per se and not shown), at least one of which can be moved towards the other one and which are provided with respective shaped surfaces facing one another, corresponding to the profiles of the opposite surfaces to be manufactured by means of compression molding of the slab 2.

In particular, the support structure 3 of the gripping system 1 defines a through cavity 5 intended to receive, in use, the slab 2 to be molded along a loading direction A that is transverse, preferably orthogonal, to the slab 2 itself and, in this specific case, is shown vertically from the top to the bottom.

More precisely, the cavity 5 has a central axis B that is vertical, parallel and coaxial to the loading direction A.

In the example shown in figure 1, the support structure 3 comprises a frame element 6, in particular with a rectangular profile, having a plurality of attachment zones 7 for selectively fixing, in predetermined positions, a desired number of gripping members 4 correlated with the configuration of the slab 2 to be subjected to the molding operation and with the retaining force on the slab 2 that is desired to be obtained.

In the specific case shown herein, the frame element 6 extends along a horizontal plane orthogonal to the loading direction A and to the central axis B. Furthermore, the frame element 6 extends around the loading direction A and the central axis B.

As shown in figure 1, the gripping members 4 are shaped like grippers to frictionally grip distinct portions, at least opposite sides, of a peripheral edge 9 of the slab 2 and to completely release the slab 2 as soon as it is compressed between the two lower and upper half-molds during molding.

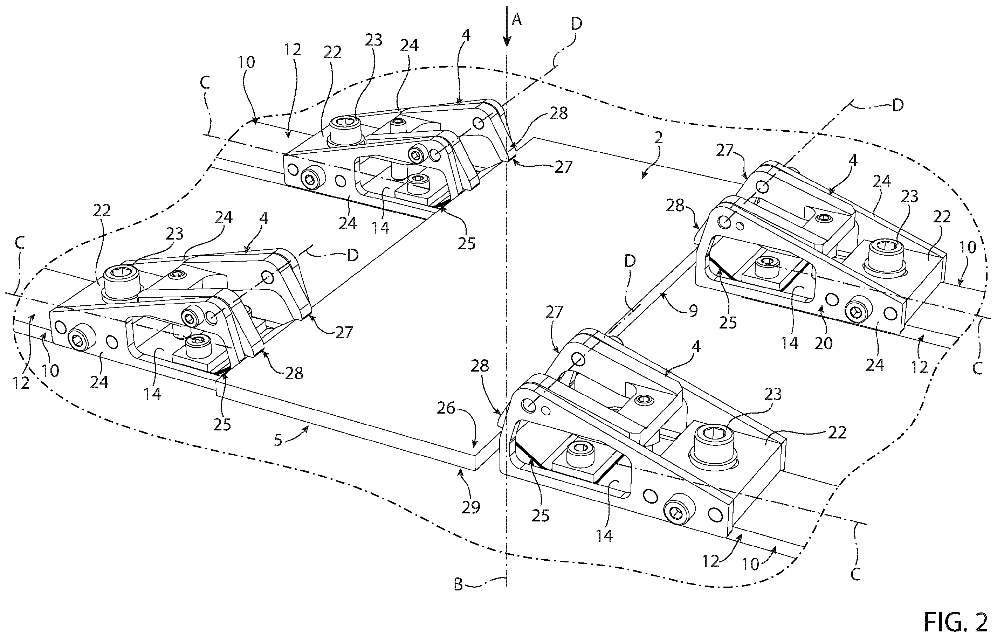

In the examples shown in figures 1 and 2, two gripping members 4 are used, which are mounted on each of the two main sides of the frame element 6 and cooperate with opposite side portions of the peripheral edge 9 of the slab 2.

As shown in figure 1, the gripping members 4 are fixed internally to the frame element 6 by means of respective support arms 10 of the support structure 3, having a variable length or extendible to be able to adapt to different profiles of the slab 2 to be subjected to the molding operation. In particular, each support arm 10 has, at one of its ends, a respective fixing portion 11 constrained in a releasable manner, by means of screws or bolts or similar connections, to a respective attachment zone 7 of the frame element 6.

In detail, in the specific case shown in figure 1, each support arm 10 mainly extends along a respective longitudinal direction C, orthogonal to the loading direction A and to the central axis B, between opposite sides of the frame element 6 and comprises a first arm element 12 and a second arm element 13 partially overlapping one another and capable of being connected in a releasable manner and in an adjustable position along the longitudinal axis C. More precisely, the arm element 12 has an end portion 14 carrying the relative gripping member 4 and an opposite end portion 15 provided with a slot 16 elongated in the respective longitudinal direction C; the arm element 13 is provided, at an end of its, with the relative fixing portion 11 and also has one or more through openings (known per se and not shown), for example holes or slots, which can be engaged by respective screws or bolts 19 or by similar releasable connecting elements, together with the slot 16 of the respective arm element 12 so as to connect the arm elements 12 and 13 to one another in a predetermined position along the respective longitudinal direction C such as to determine the overall desired length of the support arm 10 along the longitudinal direction C.

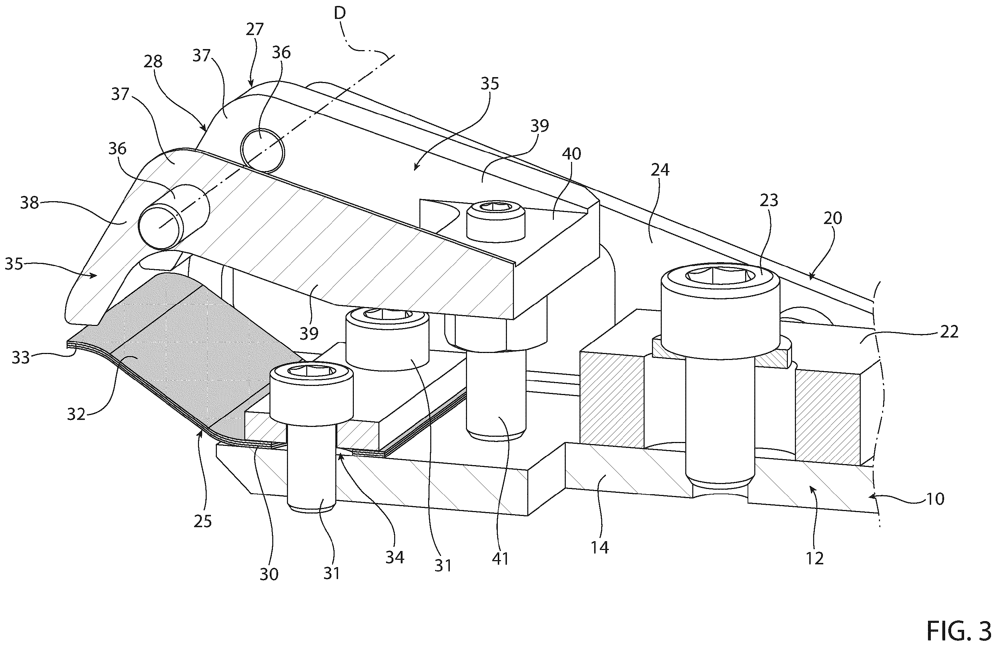

With reference to figures 2 and 3, each gripping member 4 is mounted on a frame 20, fixed to the end portion 14 of the arm element 12 of a respective support arm 10.

The frames 20 delimit between them the cavity 5 for receiving the slab 2 to be molded.

In particular, each frame 20 comprises a base plate 22, fixed in a releasable manner, by means of a screw 23, to the end portion 14, preferably also shaped as a plate, of the respective support arm 10, and two windowed lateral sides 24, fixed to the opposite sides of the base plate 22 and so as to protrude with respect to the latter in the respective longitudinal direction C in order to delimit the cavity 5 for receiving the slab 2 to be molded.

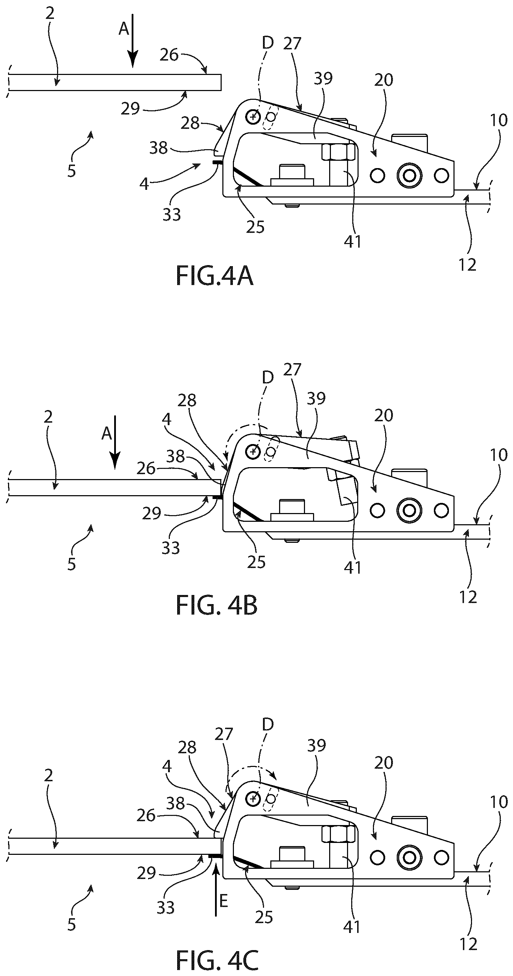

Each gripping member 4 comprises:
- an elastic resting element 25 configured to receive in abutment a first surface 29 of the peripheral edge 9 of the slab 2 and elastically deformable between a first undeformed operative position (figures 3 and 4A), set in absence of external stresses, and a second deformed operative position (figure 4C), which is spaced apart from the first operative position along a direction parallel to the loading direction A or to the central axis and is reached as a result of the movement of the slab 2 along the loading direction (A) itself; and
- a jaw 27, which faces the elastic resting element 25 along a direction parallel to the loading direction A and has a head portion 28 adapted to cooperate in use with a second surface 26 of the peripheral edge 9 of the slab 2, opposite the surface 29 with respect to the aforementioned loading direction A.

With particular reference to figure 3, the elastic resting element 25 comprises an elastic lamina protruding from the respective support arm 10 towards the area for receiving/moving the slab 2, substantially having an S-shaped profile and having:
- a flat tail portion 30, orthogonal to the loading direction A or to the central axis B, on top of the end portion 14 of the arm element 12 of the aforementioned support arm 10 and fixed to the end portion 14 in a releasable manner by means of screws 31;
- an intermediate portion 32 with a ramp increasing towards the respective jaw 27 starting from the tail portion 30; and
- a front portion 33, also flat and parallel to the tail portion 30, but arranged on the opposite side of the intermediate portion 32 with respect to the tail portion 30 as well as spaced apart from the latter towards the respective jaw 27, along a direction parallel to the loading direction A or to the central axis B.

In order to allow for an adjustment of the position of the elastic resting element 25 to and from the cavity 5 for receiving the slab 2, the tail portion 30 of the elastic resting element 25 is provided with respective slots 34 (figure 3) elongated in directions parallel to the longitudinal direction C and capable of being engaged by the screws 31.

By adjusting the position of the elastic resting element 25 of each gripping member 4 along the respective longitudinal direction C, it is possible to adjust, in turn, the retaining force exerted by the gripping member 4 upon the slab 2 and, consequently, to define the swarf to be obtained from the start.

The jaw 27 of each gripping member 4 is constrained to the lateral sides 24 of the respective frame 20 in a movable manner between a stable equilibrium operative position (figures 1, 2, 3, 4A, 4C, 5A, 5B), in which it protrudes with its head portion 28 into the cavity 5 for receiving the slab 2 and is adapted to cooperate with the respective elastic resting element 25 to retain, by gripping, the peripheral edge 9 of the slab 2, and an unstable equilibrium operative position (figure 4B), in which it is set aside from the cavity 5 for receiving the slab 2 and allows the slab 2 to move along the loading direction A in order to reach contact with the elastic resting element 25.

In particular, the jaw 27 of each gripping member 4 extends between the lateral sides 24 of the respective frame 20 and is hinged to the lateral sides 24 around a rotation axis D orthogonal to the loading direction A, to the central axis B and to the longitudinal direction C of extension of the respective support arm 10.

The rotation axis D of each jaw 27 is also parallel to the side of the peripheral edge 9 of the slab 2 upon which said jaw 27 is intended to act.

The jaw 27 of each gripping member 4 consists of two operating elements 35 parallel to one another and to the respective lateral sides 24, arranged on opposite sides of the longitudinal direction C of development of the respective support arm 10 and each having, in a view along the respective rotation axis D, a substantially upside-down V-like shape with a concavity facing the respective elastic resting element 25.

In particular, the operating elements 35 of each jaw 27 are arranged between the lateral sides 24 of the respective frame 20 and are each hinged to the lateral side 24 adjacent to it by means of a respective pin 36 coaxial to the rotation axis D; more precisely, each operating element 35 is hinged to the respective lateral side 24 in the area of an intermediate vertex portion 37 of its, which defines the upside-down V-shaped configuration.

Each operating element 35 is further divided by the intermediate portion 37 into a front gripping tooth 38, intended to cooperate with the peripheral edge 9 of the slab 2 to be molded, and into a rear portion 39, joined to the rear portion 39 of the operating element 35 of the same jaw 27 by means of a transverse plate 40.

The gripping teeth 38 of the same gripping member 4 define, as a whole, the head portion 28 of the respective jaw 27.

The rear portions 39 of the same gripping member 4 define, as a whole and together with the respective transverse plate 40, a rear portion of the respective jaw 27.

Advantageously, each jaw 27 also comprises a constraint element 41 protruding from the respective transverse plate 40 and configured to inhibit the movement of the jaw 27 from the first stable equilibrium operative position to the unstable equilibrium operative position in a direction E of movement of the slab 2 contrary to the loading direction A.

In practice, the constraint element 41 consists of a protrusion, for example a leg or a foot, projecting from the transverse plate 40 of the respective jaw 27 and intended to cooperate in contact with, or more in particular to rest on, the end portion 14 of the respective support arm 10 to prevent the jaw 27 from rotating around the rotation axis D following an external stress, for example by the slab 2, acting upon the gripping portion 28 in the direction E contrary to the loading direction A.

In other words, the rotation of each jaw 27 around the rotation axis D in a manner consistent with the loading direction A (counterclockwise rotation in figures 3, 4A, 4B, 4C) determines the lifting of the respective constraint element 41 from the respective support arm 10 and, therefore, can always be freely performed.

The contact of the constraint element 41 with the respective support arm 10 defines the stable equilibrium operative position of the respective jaw 27 (figures 1, 2, 3, 4A, 4C, 5A, 5B); from this position, a rotation of the aforementioned jaw 27 around the rotation axis D in a manner consistent with the direction E, contrary to the loading direction A, is always forbidden by the contact between the constraint element 41 and the respective support arm 10.

The mass of each jaw 27 is distributed with respect to the relative rotation axis D so as to maintain the jaw 27, in the absence of external stresses, in a condition in which the respective constraint element 41 rests on the respective support arm 10; in this condition, the head portion 28 of the jaw 27 protrudes into the cavity 5 for receiving the slab 2 to be molded (stable equilibrium operative position, figures 1, 2, 3, 4A, 4C, 5A, 5B).

The operation of the gripping system 1 is described starting from the configuration of figure 4A, in which the slab 2 is being moved in the loading direction A in order to be gripped by the gripping members 4 and be subsequently held by them in the predefined position within the cavity 5 for the compression molding operation.

In particular, the movement of the slab 2 can be carried out by automatic actuation systems (known per se and not shown), such as for example robotic systems configured to push the slab 2 so that it gets enagaged between the gripping members 4 in a centred position with respect to them.

During the descent along the loading direction A towards the cavity 5, the peripheral edge 9 of the slab 2 comes into contact with the head portions 28 of the jaws 27 and pushes them so as to cause them to rotate around the respective rotation axes D outside the cavity 5 (clockwise rotation in figure 4B). This rotation of the jaws 27 is free and causes the head portions 28 to be lowered towards the respective elastic resting elements 25 and the constraint elements 41 to move away from the respective support arms 10.

Continuing its movement in the loading direction A (vertical descent in figures 4A, 4B), the slab 2 rests with its surface 29 on the front portions 33 of the elastic resting elements 25.

The movement of the slab 2 in the loading direction A ends upon contact with the elastic resting elements 25, which at first yield in the loading direction A to reach their second deformed operative positions (figure 4C). In this condition, the slab 2 is arranged below the head portions 28 of the jaws 27 along the loading direction A; in other words, the slab 2 has moved past the jaws 27 in the loading direction A. Therefore, the jaws 27 are free to return to their first stable equilibrium operative positions with the constraint elements 41 resting again on the respective support arms 10 and with the head portions 28 protruding into the cavity 5.

Subsequently, the elastic resting elements 25 elastically return, in the direction E, towards their first undeformed operative positions, lifting the slab 2 and causing it to come into contact with the head portions 28 of the jaws 27; in this condition, the peripheral edge 9 of the slab 2 is clamped between the elastic resting elements 25 and the jaws 27 and can no longer be freed from this grip due to the inability of the jaws 27 to rotate in a direction consistent with the direction E (the resting of the constraint elements 41 on the support arms 10 forbids this rotation, in a clockwise direction in figure 4C).

Once the slab 2 has been positioned on the support structure 3, the compression molding operation can be carried out.

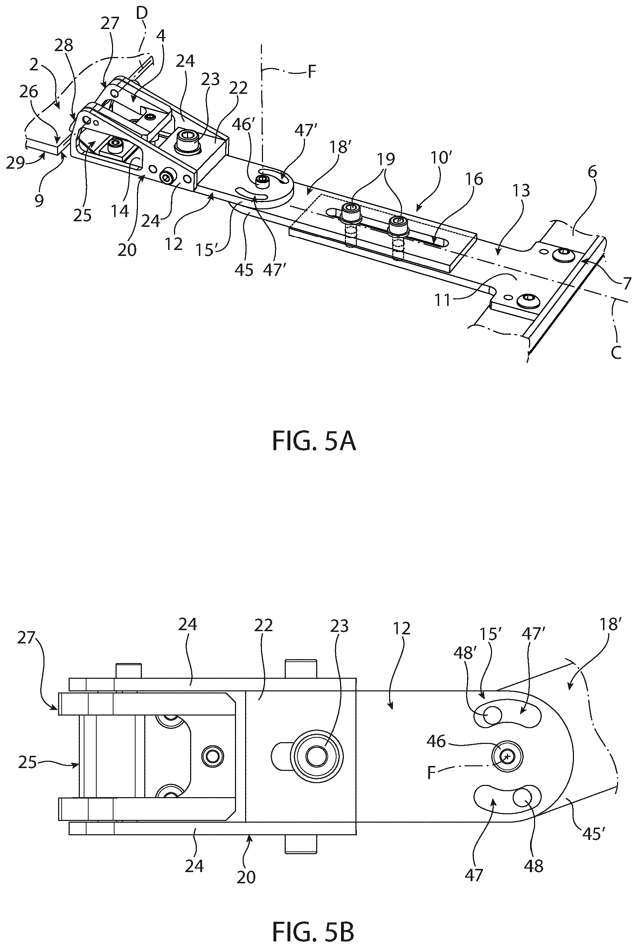

The variant shown in figures 5A and 5B describes a solution in which it is possible to adjust the position of each gripping member 4, besides along the respective longitudinal direction C, also around a hinge axis F parallel to the loading direction A and to the central axis B.

To this aim, the gripping members 4 are connected to the frame structure 6 by respective support arms 10' in three pieces: hereinafter, the support arms 10' will be described only in terms of the parts and the features that differ from those of the support arms 10, using, when possible, the same reference numbers for parts that are identical or equivalent to those of the support arms 10.

In particular, each support arm 10' comprises a third arm element 18' interposed between the respective arm elements 12 and 14, coupled to the arm element 13 in a sliding manner along the respective longitudinal direction C and adapted to enable the rotation of the arm element 12, carrying the respective gripping member 4, around the respective hinge axis F.

More in detail, the arm element 18' of each support arm 10' is provided with the slot 15 for the coupling to the respective arm element 13 by means of the screws or bolts 19.

The arm element 18' of each support arm 10' also has an end portion 45' of its own hinged to a corresponding end portion 15' of the respective arm element 12 around a pin 46' defining the respective hinge axis F.

In order to limit the oscillations of the arm element 12 of each support arm 10' around the respective hinge axis F, the relative end portion 15' is provided with arched slots 47', extending around the hinge axis F and engaged in a sliding manner by respective pins 48' (figure 5B) carried by the end portion 45' of the respective arm element 18' so that they project from it in a direction parallel to the loading direction A and to the axes B and F.

The features of the gripping system 1 according to the invention lead to evident advantages that can be obtained using it.

In particular, thanks to the peculiar structure of the gripping members 4, it is possible to achieve an automatic gripping of the plates 2 to be molded without manual interventions and/or adjustments.

Therefore, it is possible to significantly reduce both production times and production costs compared to those of known systems. Furthermore, the gripping system 1 can be fully integrated into automated industrial production systems.

The particular configuration and structure of the gripping members 4 also allows peripheral swarf to be minimized to a few millimetres, thus remarkably reducing it compared to known systems.

At the same time, the adjustment system for the starting position of the elastic resting elements 25 and of the jaws 27 permits a versatile use of the gripping system 1 with plates 2 having different masses and profiles and enables an adjustment of the retention force exerted by the gripping members 4 upon the plates 2.

Finally, the geometry of the gripping system 1 is suitably designed to minimize the surfaces in contact with the slab 2, in order to minimize the thermal footprint of the gripping members 4 on the slabs 2. This helps minimize heat dissipation during thermoforming operations.

Finally, the gripping system 1 described and shown herein can be subjected to changes and variants, without for this reason going beyond the scope of protection set forth in the appended claims.

## Claims

1. Gripping system (1) for compression molding of a slab (2) of composite material, in particular with a thermoplastic matrix, said gripping system (1) comprising:
- a support structure (3) defining a cavity (5) designed to receive in use said slab (2) to be molded in a loading direction (A) transverse to the slab (2) itself; and
- at least two releasable gripping members (4), carried by said support structure (3) and configured to retain said slab (2) in a predetermined position for molding;
in which said gripping members (4) are configured to frictionally grip distinct portions of a peripheral edge (9) of said slab (2) and to completely release the slab (2) itself as soon as it is compressed during molding;
**characterized in that** each said gripping member (4) comprises:
- an elastic resting element (25) configured to receive in abutment a first surface (29) of said peripheral edge (9) of said slab (2) and elastically deformable between a first undeformed operative position, set in absence of external stresses, and a second deformed operative position, spaced from the first operative position along said loading direction (A) and reached as a result of the movement of said slab (2) along the loading direction (A) itself; and
- a jaw (27), which faces said elastic resting element (25) along said loading direction (A) and has a head portion (28) adapted to cooperate in use with a second surface (26) of said peripheral edge (9) of said slab (2), opposite to said first surface (29) with respect to said loading direction (A); said jaw (27) being movable between a stable equilibrium operative position, in which it protrudes inside said cavity (5) with its head portion (28) and is adapted to cooperate with said elastic resting element (25) to retain in grip said peripheral edge (9) of said slab (2), and an unstable equilibrium operative position, in which it is set aside from said cavity (5) and allows the movement of said slab (2) along said loading direction (A) to reach contact with said elastic resting element (25);
and **characterized by** also comprising a constraint element (41) that inhibits the displacement of said jaw (27) from said stable equilibrium operative position to said unstable equilibrium operative position in a movement direction (E) of said slab (2) opposite to said loading direction (A).

2. Gripping system according to claim 1, wherein said cavity (5) has a central axis (B) and wherein said loading direction (A) is parallel to said central axis (B).

3. Gripping system according to claim 2, wherein said central axis (B) and said loading direction (A) are vertical.

4. Gripping system according to any one of the preceding claims, wherein said elastic resting element (25) of each gripping member (4) comprises an elastic lamina having a first end portion (30) fixed with respect to said support structure (3) and a second opposite end portion (33), protruding with respect to said support structure (3) towards said cavity (5) and free to flex in said loading direction (A) upon receipt of said slab (2) in the loading direction (A) itself.

5. Gripping system according to claim 4, further comprising adjustment members (16, 19) interposed between said first end portion (30) of said elastic resting element (25) of each gripping member (4) and said support structure (3) to adjust the position of the elastic resting element (25) itself to and from said cavity (5).

6. Gripping system according to any one of the preceding claims, wherein said jaw (27) of each said gripping member (4) has its own intermediate portion (37) hinged, about a rotation axis (D) orthogonal to said loading direction (A), to a frame (20) fixed with respect to said support structure (3).

7. Gripping system according to claim 6, wherein said jaw (27) of each gripping member (4) further comprises a rear portion (39, 40), disposed on the opposite side of said intermediate portion (37) with respect to said head portion (28), and wherein said constraint element (41) comprises a projection protruding cantilevered from said rear portion (39, 40) of said jaw (27) and configured to cooperate in contact with a predefined part of said support structure (3) and prevent the rotation of the jaw (27) itself from said stable equilibrium operative position in the event of external stress on said head portion (28) in the movement direction (E) opposite to said loading direction (A).

8. Gripping system according to any one of the preceding claims, wherein said support structure (3) comprises a frame element (6) extending around said loading direction (A) and having a plurality of attachment zones (7) for selectively fixing a desired number of said gripping members (4) related to the configuration of the slab (2) to be subjected to compression molding and to the retaining force that is desired to be exerted on said slab (2).

9. Gripping system according to claim 8, wherein said gripping members (4) are fixed internally to said frame element (6) by means of variable or extendable length support arms (10, 10') of said support structure (3); said support arms (10, 10') being constrained, at their own end portions (11), to respective said attachment zones (7) and extending along respective longitudinal directions (C) orthogonal to said loading direction (A).

10. Gripping system according to claim 9, wherein each said support arm (10') comprises at least two arm elements (12, 18'), hinged to each other about a hinge axis (F) parallel to said loading direction (A), such that one (12) of said arm elements (12, 18') can rotate with respect to the other (18') of said arm elements (12, 18') so as to orient the respective gripping member (4) with respect to the slab (2) to be gripped and compression molded.
